# EUROPÄISCHE PATENTSCHRIFT

(11) **EP 0 536 539 B1**
(45) Veröffentlichungstag und Bekanntmachung des Hinweises auf die Patenterteilung: **05.11.1997**
(21) Anmeldenummer: 92115204.7
(22) Anmeldetag: 05.09.1992
(51) Int. Cl.: H04Q 7/06, H04Q 7/08, H04Q 7/10

(54) **Funkrufnetz zum Uebermitteln von teilnehmerbezogenen Funkrufsignalen und Verfahren zu dessen Betrieb**
Paging network for transmission of subscriber related paging signals and method for use
Réseau d'appel radio pour la transmission de signaux d'appel radio relatifs aux abonnés et méthode pour son exploitation

(30) Priorität: 08.10.1991 CH 2964/91
(43) Veröffentlichungstag der Anmeldung: 14.04.1993
(73) Patentinhaber: FIRMA ERIKA KÖCHLER, CH-8833 Samstagern (CH)
(72) Erfinder: Köchler, Helmut, CH-8833 Samstagern (CH)
(74) Vertreter: Blum, Rudolf Emil Ernst

(56) Entgegenhaltungen:
- WO-A-90/04314
- GB-A- 2 173 674
- US-A- 4 506 384

## Beschreibung

Die Erfindung betrifft ein Funkrufnetz und ein Verfahren zu dessen Betrieb gemäss dem Oberbegriff der unabhängigen Ansprüche. Solche Funkrufnetze werden in der Fachsprache als Pagingnetze bezeichnet. Teilnehmerbezogene Rufmeldungen können z.B. über das öffentliche Telephonnetz und die Rufzentrale in das jeweilige Pagingnetz eingegeben werden. Dort erfolgt die Verteilung dieser Rufmeldungen auf die räumlich im Versorgungsgebiet verteilten Basisstationen, die dann alle dieselben Meldungen synchron und gemeinsam aussenden. Mit einem tragbaren Rufempfänger oder Pager können diese Rufmeldungen im Versorgungsgebiet empfangen werden, wobei jeder Pager nur jeweils die an ihn adressierten Rufmeldungen auswertet. Pagingnetze sind z.B. in der Europäischen Patentveröffentlichung Nr. 0 198 448 oder 0 197 556 näher beschrieben.

Sogenannte OFF-Site-Pagingnetze sind überlokale Netze für grössere Gebiete, wie z.B. ganze Länder oder sogar Kontinente, während ON-Site-Pagingnetze lokale Netze sind, die sich normalerweise auf einzelne Objekte, wie Spitäler, Industriebetriebe, Hotels etc. beschränken. Ihre Reichweite übersteigt die Ausdehnung des jeweiligen Objekts nicht wesentlich.

Nach den bisherigen Erfahrungen in der Praxis werden die meisten Rufaussendungen nur lokal benötigt. Es haben sich deshalb für On- und Off-Site-Pagingnetze unabhängige Systeme entwickelt. Will ein On-Site-Pagingteilnehmer auch ausserhalb des eigenen Versorgungsgebiets Rufmeldungen empfangen, muss er deshalb zusätzlich auch noch Teilnehmer eines OFF-Site-Netzes werden und einen entsprechenden Pager mitführen. Um dies zu verhindern, könnten OFF-Site-Pagingnetze an sich so eingerichtet werden, dass davon auch das Gebiet von ON-Site-Netzen abgedeckt wird. Die Teilnehmer würden dann einen OFF-Site-Pager mit sich führen, der sowohl im lokalen Versorgungsbereich als auch im überlokalen Versorgungsbereich Rufmeldungen erhalten kann. Dies setzte aber voraus, dass alle Rufmeldungen via das überlokale Netz ausgesendet werden. Damit würde dieses Netz stark mit Meldungen belastet, die nur in den ON-Site-Versorgungsbereichen benötigt werden. Die Gebühren für solche Teilnehmer würden entsprechend hoch werden. Aus diesen Gründen wurde bisher von solchen Systemen abgesehen.

Ein weiteres Problem bei solchen Pagingnetzen ergibt sich daraus, dass jeweils bis zu den Basisstationen eine leitungsgebundene Ubermittlung der Rufmeldungen erfolgt. Die Leitungskosten für die Uebermittlung der lokalen Rufmeldungen über das gesamte Netz würde den Zusammenschluss von OFF-Site und ON-Site-Netzen weiter verteuern. Ferner würde ein Leitungsausfall die gesamten lokalen Netze lahm legen.

US 4 506 384 beschreibt ein System, bei welchem deshalb ein zentraler Sender für überlokale Meldungen und mehrere Basissender für lokale Meldungen vorgesehen sind. Damit alle Sender auf der gleichen Frequenz arbeiten können, werden sie zyklisch betrieben, wobei in einem Teilzyklus der zentrale Sender überlokale Meldungen überträgt, in einem anderen Teilzyklus die lokalen Sender individuelle lokale Meldungen. Dies benötigt jedoch eine entsprechend komplizierte Netzstruktur.

Es stellt sich auf diesem Hintergrund die Aufgabe, ein Funkrufnetz derart auszugestalten und zu betreiben, dass dessen Teilnehmer sowohl via lokale als auch via überlokale Netze erreichbar sind, ohne dass die erwähnten Nachteile in Kauf genommen werden müssen.

Die Lösung dieser Aufgabe ergibt sich aus den in den Patentansprüchen umschriebenen Massnahmen.

Jedes On-Site-Netz kann dabei mit einer Basisstation ausgerüstet werden, die auf der OFF-Site-Frequenz arbeitet und eine Steuerung besitzt, die es ermöglicht, in Zeitfenstern der periodischen Uebermittlungsstruktur zeitlich gestaffelt ON-Site-Meldungen und OFF-Site-Meldungen auf derselben Frequenz auszusenden. Die OFF-Site-Meldungen gelangen weiterhin via Funk oder Draht von der Rufzentrale an die Basisstation, während die ON-Site-Meldungen lokal eingespeist und im entsprechenden Zeitfenster lokal ausgesendet werden. Die anderen Basisstationen des OFF-Site-Systems sind ebenfalls so gesteuert, dass sie das ON-Site-Zeitfenster beachten und während dieser Zeit keine oder nur ihre lokal erhaltenen Meldungen aussenden. Im OFF-Site-Zeitfenster werden die Basisstationen jeweils von der Rufzentrale gesteuert.

Die in Anspruch 1 vorgeschlagene Lösung erlaubt es andererseits auch, in der periodischen Uebermittlungsstruktur Zeitfenster für Uebermittlungen zwischen den Basisstationen auf der Pagingfrequenz zu öffnen, ohne die OFF-Site-Uebermittlungen an die Pager zu stören. In einem Zeitfenster können z.B. die OFF-Site-Rufmeldungen mit erhöhter Uebermittlungsrate an solche Basisstationen übermittelt werden, zu denen keine Leitungsverbindung besteht oder diese unterbrochen ist. Die so an die Basisstationen übermittelten Rufmeldungen werden dann im OFF-Site Zeitfenster regulär gemeinsam von allen Basisstationen ausgesendet. Solche Zeitfenster gestatten es also, Basisstationen ohne Leitungsverbindung zur Rufzentrale einzurichten. Es ist mit der in Anspruch 1 vorgeschlagenen Lösung auch möglich, Zeitfenster für Retourmeldungen von den Basisstationen zurück an andere Basisstationen vorzusehen, z.B. zum Uebermitteln von Statusmeldungen oder (bei unterbrochener Leitungsverbindung) zur Uebermittlung von Meldungsanfragen.

Nachfolgend werden anhand der Zeichnungen Ausführungsbeispiele für die beanspruchte Erfindung näher erläutert. Es zeigen:
Fig. 1 eine Darstellung eines Pagingnetzes mit kombinierter lokaler und überlokaler Funktion,
Fig. 2 ein Zeitdiagramm der Uebermittlungsstruktur dieses Netzes,
Fig. 3 ein Blockschema des Interfaces der Basisstationen,
Fig. 4 einen Teil eines Pagingnetzes mit Basisstation ohne Leitungsverbindung,
Fig. 5 ein Zeitdiagramm der Uebermittlungsstruktur dieses Netzes, und
Fig. 6 ein Teil des Netzes von Fig. 1 bei Leitungsunterbrechung.

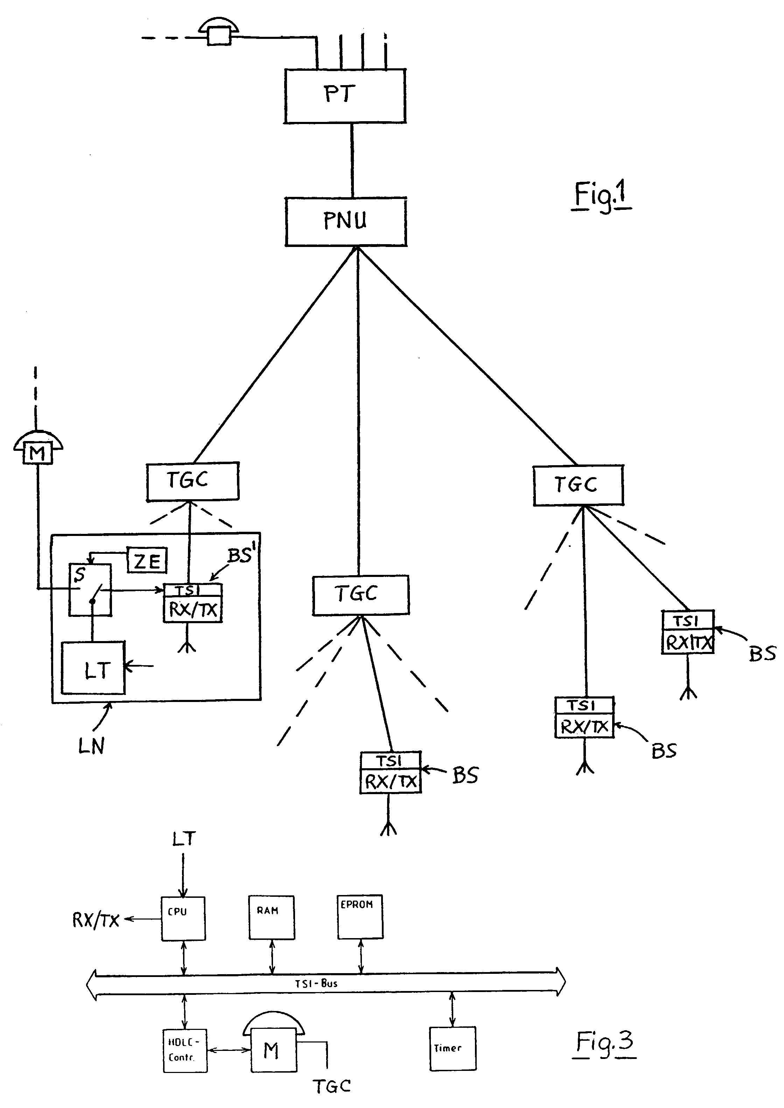

In Fig. 1 ist ein an sich bekanntes Paging-Netz dargestellt.

Das überlokale Personenrufnetz setzt sich gemäss Fig. 1 aus im wesentlichen folgenden Komponenten zusammen. In einer Funkrufzentrale PT (Paging Terminal), welche das Verbindungsglied zwischen dem öffentlichen Telefonnetz und dem Personenrufsystem darstellt, werden die Teilnehmerdaten verwaltet und die ankommenden Anrufe in für das Personenrufsystem geeignete, serielle Datenströme im sogenannten POCSAG-Format oder dergl. umgesetzt.

Eine Netzsteuereinheit PNU (Paging Network Unit) ist mit der Funkrufzentrale verbunden und sammelt eine bestimmte Anzahl Rufe jeweils zu einem Datenpaket. Jedes Datenpaket wird entsprechend kodiert und zur Weitersendung bereitgestellt. Die Rufe werden so für die Aussendung nach ca. 30 Sekunden zwischengespeichert. Die Netzsteuereinheit ist zugleich für die synchrone Aussendung der Rufmeldungen zuständig. Hierfür versieht sie jede Rufmeldung mit einem Zeitstempel, der den Zeitpunkt ihrer Aussendung festlegt.

Mehrere örtlich verteilte Sendergruppen-Steuereinheiten TGC (Transmitter Group Controllers) sind mit der Netzsteuereinheit PNU (über Telefonleitungen) verbunden. Diese Sendergruppen-Steuereinheiten verteilen die Datenpakete, die sie von der Netzsteuereinheit erhalten, auf die eigentlichen Funkrufsender oder stationen BS.

Die Basisstationen BS, von denen jeweils mehrere (über Telefonleitung) mit einer Sendergruppen-Steuereinheit TGC verbunden sind, stellen das Ende der leitungsgebundenen bzw. den Ausgangspunkt für die Funk-Uebermittlung der Rufe dar. Von den Basisstationen BS werden die Rufe über Funk auf einer oder mehreren Sendefrequenzen an die Empfänger weitergesendet. Die stationen sind örtlich so verteilt, dass eine flächendeckende Ausstrahlung der Funkrufe im Versorgungsgebiet erfolgt. Sie besitzen eine Schnittstelle TSI (Transmitter Site Interface), welche zur Zwischenspeicherung der Rufe und zur synchronen Ausstrahlung jedes Rufes gemäss seinem Zeitstempel durch den damit verbundenen Sendeempfänger RX/TX vorgesehen ist.

Die Rufempfänger (nicht dargestellt) werden von den Teilnehmern mitgetragen und empfangen die an sie adressierten Rufe auf der vorgegebenen Frequenz. Die Funksignale, die von den verschiedenen Basisstationen ausgesandt werden, können sich wegen der flächendeckenden Ausstrahlung an bestimmten Orten überschneiden. Dort ist ein störungsfreier Empfang nur möglich, wenn die Rufmeldungen verschiedener Basisstationen zeitgleich, d.h. synchron, empfangen werden. Hierzu werden die Uhren der Basisstationen periodisch gleichgestellt. Dies erfolgt dadurch, dass die Basisstationen BS über Funk Verbindung miteinander aufnehmen und ihre Uhren auf Grund von einander zugesandten Synchronisiermeldungen gleichstellen. Der Ablauf der Synchronisation erfolgt gemäss einem Synchronisierbefehl aus der Netzsteuereinheit PNU, der über Telephonleitung an alle Basisstationen übermittelt wird. Der Synchronisationsvorgang selbst ist im einzelnen in der erwähnten europäischen Patentveröffentlichung Nr. A-198 448 beschrieben.

Ein solches, überlokales (OFF-Site) Funkrufnetz bekannter Art setzt also voraus, dass alle Basisstationen dieselben Rufmeldungen zeitgleich aussenden.

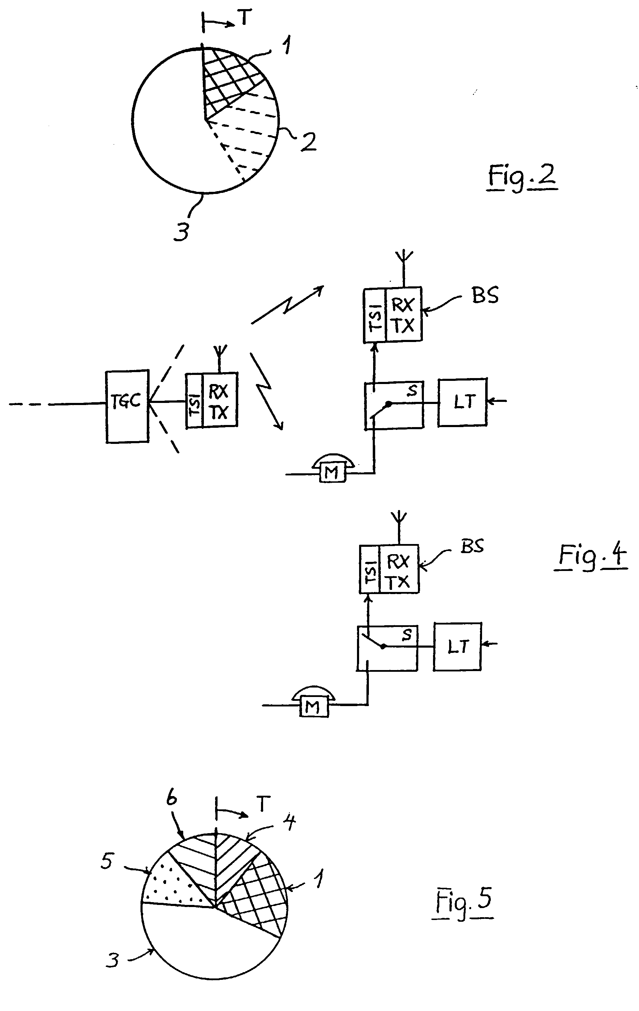

Erfindungsgemäss erfolgt nun die Aussendung der Rufmeldungen in einer periodischen Uebermittlungsstruktur. Jeder Uebermittlungszyklus, in Fig. 2 durch einen Kreis dargestellt, hat dieselbe Dauer, z.B. 30 Sekunden, und wird zentral durch die Netzsteuereinheit PNU festgelegt. Die Uebermittlungszyklen laufen damit bei den Basisstationen BS synchron ab. Innerhalb jedes Zyklus sind verschiedene Zeitabschnitte oder Zeitfenster festgelegt, wie durch die Sektoren 1 bis 3 in Fig. 2 angedeutet. Die überlokalen Rufmeldungen werden nun z.B. innerhalb des Zeitfensters 3 in der beschriebenen Weise von allen Basisstationen BS synchron ausgesendet. Dabei bleibt nun aber mindestens ein anderes Zeitfenster 1 ausgespart. Innerhalb dieses Zeitfensters 1 können die Basisstationen auf der Sendefrequenz andere Rufmeldungen aussenden, ohne das überlokale Funkrufnetz zu stören.

Wie in Fig. 1 gezeigt, können auf diese Weise lokale (ON-Site)-Funkrufnetze in ein OFF-Site-Netz integriert werden. In Fig. 1 ist nur ein solches lokales Rufnetz LN gezeigt, es ist jedoch klar, dass grundsätzlich jede Basisstation BS ein solches bilden kann. Das lokale Rufnetz LN ist auf ein einzelnes Objekt, z.B. einen Industriebetrieb beschränkt. Die entsprechende Basisstation BS', die auf derselben Frequenz wie das überlokale Funkrufnetz arbeitet und Teil desselben ist, besitzt in seiner Schnittstelle TSI eine Steuerung, die es ermöglicht, im lokalen Zeitfenster 1 lokale Rufmeldungen autonom und unabhängig vom überlokalen Netz auszusenden. Die lokalen Rufmeldungen werden ohne Umweg über das überlokale Netz direkt der entsprechenden Basisstation BS' zugeführt und durch diese im Zeitfenster 1 ausgesendet. Lokale Rufaufträge gelangen zunächst in eine lokale Zentrale LT. Von dort werden sie zur lokalen Aussendung an die zugehörige Basisstation BS' weiterübermittelt, wo sie zwischengespeichert und im lokalen Zeitfenster 1 durch die Basisstation BS' ausgesendet werden. Dabei kann, wie in Fig. 1 gezeigt, im lokalen Netz LN eine Steuerung vorgesehen sein, mittels welcher die Aussendung lokaler Rufaufträge zugleich auch überlokal via OFF-Site-Rufnetz ermöglicht wird. Mittels einem Umschalter S wird der Rufauftrag entweder über Modem M und Telephonleitung an das überlokale Netz oder ans Interface TSI der lokalen Basisstation BS' übermittelt. Die Steuerung des Umschalters S kann manuell oder automatisch, z.B. durch ein lokales Zeiterfassungssystem ZE in Abhängigkeit davon erfolgen, ob sich der gesuchte Teilnehmer im Objekt befindet oder nicht. Im ersten Fall erfolgt die Aussendung der Rufmeldung im lokalen Zeitfenster 1 (Fig. 2) durch die lokale Basisstation BS', im zweiten Fall im überlokalen Zeitfenster 3 durch sämtliche Basisstationen BS (einschliesslich der lokalen Basisstation BS').

Für die lokale Aussendung der Rufmeldung gelangt diese in das Interface TSI der Basisstation BS', das gemäss Fig. 3 aufgebaut sein kann. Das Interface besitzt ausser einem Prozessor CPU einen Programmspeicher EPROM und einen Schreib-Lese Speicher RAM für die Rufmeldungen. Mittels einem Timer wird der synchrone Betrieb mit dem Netz aufrecht erhalten. Ein Modem M und ein HDLC-Controller stellen die Verbindung zur Sendergruppensteuereinheit TGC des überlokalen Netzes her. Aus dieser treffen die überlokalen Rufmeldungen in der Basisstation ein, während die lokalen Rufmeldungen aus der lokalen Zentrale LT vom Prozessor CPU des Interface TSI übernommen werden. Die Rufmeldungen werden im Speicher RAM für die Aussendung im entsprechenden Zeitfenster zwischengespeichert. Die lokalen Rufmeldungen werden im Speicher RAM des Interface TSI gesammelt und zeitlich gestaffelt im Zeitfenster 1 ausgesendet. Ausserhalb dieses Zeitfensters 1 erfolgt die Steuerung der Basisstation BS' durch die Netzsteuereinheit PNU.

Durch die beschriebene Kombination von ON- und OFF-Site-Uebermittlung kann ein ON-Site-Teilnehmer mit nur einem Pager sowohl innerhalb wie ausserhalb des lokalen Versorgungsgebiets Rufmeldungen empfangen. Dabei wird eine gute Ausnutzung der Funkfrequenz erreicht, da lokale Suchaufträge in der Regel nur lokal ausgesendet werden und das überlokale Netz nicht belasten.

Ein kleiner Nachteil besteht darin, dass die Reichweite der Basisstationen während der Aussendung lokalen Rufmeldungen im Zeitfenster 1 wegen Störung durch benachbarte Basisstationen, die ihre eigenen lokalen Rufmeldungen mit anderem Informationsgehalt aussenden, reduziert werden kann. Dies lässt sich jedoch in Kauf nehmen, weil die praktische Reichweite der Basisstationen in der Regel grösser ist, als der unmittelbare ON-Site-Bereich.

In Fig. 2 ist ein weiteres Zeitfenster 2 innerhalb des Uebermittlungszyklus angedeutet. Dieses kann für eine regionale Aussendung der Rufmeldungen vorgesehen sein, z.B. im Gebiet aller Basisstationen, die zu derselben Sendergruppensteuereinheit TGC gehören. Die lokale Rufanfrage gelangt in diesem Fall über die betreffende, lokale Basisstation BS' an die zugehörige Sendergruppensteuereinheit TGC und wird von dort den anderen, angeschlossenen Basisstation BS zur synchronen Aussendung im Zeitfenster 2 übermittelt. Auf diese Weise kann das Versorgungsgebiet nach Bedarf in lokale, regionale und landesweite Netze gegliedert werden, die auf derselben Frequenz aber im wesentlichen unabhängig voneinander betreibbar sind, so dass sich eine optimale Nutzung der Netze ergibt und für die Benutzung aller Netze nur ein Pager notwendig ist.

Die erläuterte Technik der Bildung von Zeitfenstern in einer periodischen Uebermittlungsstruktur kann in einem OFF-Site-Pagingnetz aber auch weitere vorteilhafte Anwendungen finden. Diese werden anhand der Figuren 4 bis 6 erläutert.

Fig. 4 zeigt einen Teil eines Paging-Netzes der eingangs beschriebenen Art. Dabei sind zwei der gezeigten Basisstationen BS ohne Leitungsverbindung zu einer Sendergruppensteuereinheit TGC. Die überlokalen (OFF-Site) Rufmeldungen werden ihnen per Funk in einem speziellen Zeitfenster 4 (vergl. Fig. 5) von einer beBasisstation auf der Pagerfrequenz mit hoher Uebertragungsrate übermittelt. Alle Basisstationen senden danach die erhaltenen Rufmeldungen synchron im überlokalen Zeitfenster 3 auf der Pagerfrequenz zum Empfang für die Pager aus. Bei entsprechend hoher Uebertragungsrate von z.B. 9600 Baud im Zeitfenster 4 (gegenüber z.B. 512 Baud im Zeitfenster 3) wird das Netz zeitlich nur geringfügig belastet. Andererseits kann sich dadurch eine erhebliche Einsparung der Leitungskosten zu den Basisstationen ergeben.

Die Verwendung eines besonderen Zeitfensters 4 für die leitungslose Uebermittlung von Rufmeldungen an die (und zwischen den) Basisstationen in OFF-Site-Netzen braucht nicht notwendigerweise mit der beschriebenen Integration von ON-Site-Netzen kombiniert zu werden. Eine Kombination besitzt jedoch den Vorteil, dass die Basisstationen BS' der lokalen Netze LN dadurch ohne tungskosten betrieben werden können.

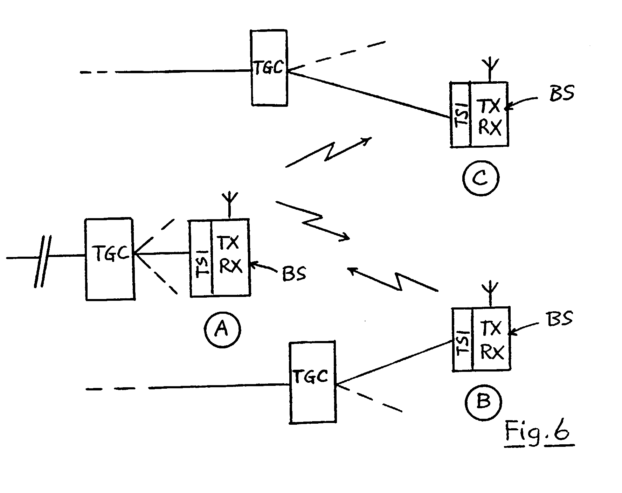

Schliesslich lässt sich die erläuterte Technik auch zur Erhöhung der Uebertragungssicherheit in OFF-Site-Netzen einsetzen, wie anhand der Figuren 5 und 6 erläutert wird. In Figur 6 sind drei Basisstationen BS dargestellt, die mit den Buchstaben A, B und C gekennzeichnet sind. Fällt nun die Leitungsverbindung zur Basisstation A aus, erhält diese von der Rufzentrale keine Rufmeldungen mehr und im Versorgungsgebiet entsteht ein Loch. Im Uebermittlungszyklus kann nun mindestens ein weiteres Zeitfenster 5 (vergl. Fig. 5) vorgesehen sein, in welchem die Basisstation A auf der Pagerfrequenz einen Meldungswunsch aussendet, nachdem sie keine Rufmeldung erhalten hat. Eine benachbarte Basisstation B hört diesen Meldungswunsch und sendet die Rufmeldung im Zeitfenster 4 (mit erhöhter Uebermittlungsrate), wie vorstehend beschrieben. Diese wird von der Basisstation A empfangen und zwischengespeichert. Danach senden alle Basisstationen die Rufmeldung im Zeitfenster 3 für alle Pager. Das Zeitfenster 5 für die Rückübermittlung der Meldungswünsche von Basisstationen auf der Pagerfrequenz ergibt zusammen mit dem Zeitfenster 4 für die Uebermittlung von Rufmeldungen zwischen Basisstationen einen alternativen Verteilungsweg für die Rufmeldungen und erhöht so die Uebertragungssicherheit. Schliesslich kann auch ein Zeitfenster 6 für Statusrückmeldungen der Basisstationen bei fehlender Leitungsverbindung vorgesehen sein. Obwohl in Fig. 5 alle diese Zeitfenster im Uebermittlungszyklus eingezeichnet sind, lassen sie sich auch unabhängig voneinander anwenden.

## Patentansprüche

1. Funkrufnetz zum Übermitteln von teilnehmerbezogenen lokalen und überlokalen Rufmeldungen an tragbare Rufempfänger, mit einer Rufzentrale (PT), über welche die Rufmeldungen ins Funkrufnetz einspeisbar sind, mit mindestens einer Netzsteuereinheit (PNU) zur Steuerung des Netzbetriebes und mit einer Anzahl räumlich verteilter Basisstationen (BS, BS'), welche die lokalen Rufmeldungen auf mindestens einer vorgegebenen Sendefrequenz aussenden, wobei das Funkrufnetz für die Aussendung der Rufmeldungen in einer zyklischen Übermittlungsstruktur ausgestaltet ist, wobei innerhalb eines Zyklus mindestens ein erstes Zeitfenster für die Ausstrahlung der überlokalen Rufmeldungen vorgesehen ist, sowie mindestens ein zweites Zeitfenster für die Ausstrahlung der lokalen Rufmeldungen individuell durch einzelne oder eine Gruppe der Basisstationen (BS, BS'), dadurch gekennzeichnet, dass das Funkrufnetz zur Übermittlung der überlokalen Rufmeldungen an die Basisstationen (BS, BS') ausgestaltet ist, und die Basisstationen (BS, BS') zur gemeinsamen, synchronen Aussendung der überlokalen Rufmeldungen auf der mindestens einen vorgegebenen Sendefrequenz im ersten Zeitfenster ausgestaltet sind.

2. Funkrufnetz nach Anspruch 1, dadurch gekennzeichnet, dass mindestens eine Basisstation (BS') als Teil eines lokalen Rufnetzes (LN) ausgebildet ist und Einrichtungen (TSI) zum Speichern und Aussenden lokaler Rufmeldungen im zweiten Zeitfenster aufweist.

3. Funkrufnetz nach Anspruch 2, dadurch gekennzeichnet, dass diese mindestens eine Basisstation (BS') mit einer lokalen Zentrale (LT) verbunden ist, die eine Steuerung (S) zum wahlweisen Übermitteln lokaler Rufmeldungen an die Rufzentrale (PT) des Funkrufnetzes oder an die zugehörige Basisstation aufweist.

4. Funkrufnetz nach Anspruch 3, dadurch gekennzeichnet, dass die Steuerung (S) mit einer lokalen Vorrichtung zur Anwesenheitskontrolle (ZE) verbunden ist, zur Feststellung, ob sich ein Teilnehmer im Bereich der jeweiligen Basisstation befindet, und lokale Rufmeldungen bei Anwesenheit des Teilnehmers an die zugehörige Basisstation, bei Abwesenheit des Teilnehmers an die Rufzentrale des Funkrufnetzes übermittelt werden.

5. Funkrufnetz nach einem der vorangehenden Ansprüche, dadurch gekennzeichnet, dass eine erste Gruppe der Basisstationen keine Leitungsverbindung zur Rufzentrale (PT) besitzt, und eine zweite Gruppe der Basisstationen Leitungsverbindung zur Rufzentrale besitzt, und dass Basisstationen der zweiten Gruppe dazu ausgebildet sind, in einem weiteren definierten Zeitfenster der zyklischen Übermittlungsstruktur die Rufmeldungen auf der vorgegebenen Sendefrequenz mit erhöhter Übermittlungsrate an die Basisstationen der ersten Gruppe zu übermitteln.

6. Funkrufnetz nach einem der vorangehenden Ansprüche, dadurch gekennzeichnet, dass die Basisstationen eine Steuereinrichtung (TSI) besitzen, mittels welcher in einem weiteren, definierten Zeitfenster der zyklischen Übermittlungsstruktur von jeder Basisstation autonom Statusmeldungen oder Meldungswünsche auf der vorgegebenen Sendefrequenz an andere Basisstationen übermittelbar sind.

7. Verfahren zum Betrieb eines Funkrufnetzes zum Übermitteln von teilnehmerbezogenen lokalen und überlokalen Rufmeldungen an tragbare Rufempfänger mittels einer Rufzentrale (PT), mindestens einer Netzsteuereinheit (PNU) zur Steuerung des Netzbetriebes und einer Anzahl räumlich verteilter Basisstationen (BS, BS'), wobei die lokalen Rufmeldungen auf mindestens einer vorgegebenen Sendefrequenz über die Basisstationen ausgesendet werden, wobei die Rufmeldungen in einer zyklischen Übermittlungsstruktur ausgesendet werden, wobei innerhalb eines Zyklus mindestens ein erstes Zeitfenster für die Ausstrahlung der überlokalen Rufmeldungen vorgesehen ist, sowie mindestens ein zweites Zeitfenster für die Ausstrahlung der lokalen Rufmeldungen individuell durch einzelne oder eine Gruppe der Basisstationen (BS, BS'), dadurch gekennzeichnet, dass die überlokalen Rufmeldungen an die Basisstationen (BS, BS') geleitet und über die Basisstationen (BS, BS') im ersten Zeitfenster auf der mindestens einen vorgegebenen Sendefrequenz synchron und gemeinsam ausgesendet werden.

8. Verfahren nach Anspruch 7, dadurch gekennzeichnet, dass mindestens ein Teil der Basisstationen lokale Rufmeldungen zwischenspeichern und diese im zweiten Zeitfenster jeweils autonom aussenden.

9. Verfahren nach Anspruch 8, dadurch gekennzeichnet, dass lokale Rufmeldungen wahlweise durch die zugehörige Basisstation im zweiten Zeitfenster oder via die Rufzentrale durch alle Basisstationen im ersten Zeitfenster ausgesendet werden.

10. Verfahren nach einem der Ansprüche 7 bis 9, dadurch gekennzeichnet, dass durch die Netzsteuereinheit weitere Zeitfenster in der zyklischen Übermittlungsstruktur frei gehalten werden, in denen die Basisstationen untereinander Meldungen austauschen.

## Claims

1. Paging network for transmitting subscriber related local an non-local paging calls to portable pager receivers, with a call center (PT), by means of which the paging calls can be fed into the paging network, with at least one paging network unit (PNU) for controlling the network operation and with a number of spatially distributed base stations (BS, BS'), which emit the local paging calls on at least one given emission frequency, wherein the paging network is designed for the emission of the paging calls in a cyclical transmission structure, wherein within one cycle at least one first time window for the emission of the non-local paging calls is provided, as well as at least one second time window for the emission of the local paging calls individually by single or a group of the base stations (BS, BS'), characterised in that the paging network is designed for the transmission of the non-local paging calls to the base stations (BS, BS') and the base stations are designed for the simultaneous, synchronous emission of the non-local paging calls on the at least one given emission frequency in the first time window.

2. Paging network of claim 1 characterised in that at least one base station (BS') is designed as part of a local paging network (LN) and comprises installations (TSI) for storing and emitting local paging calls in the second time window.

3. Paging network of claim 2 characterised in that this at least one base station (BS') is connected to a local center (LT) that comprises a control (S) for selective transmission of local paging calls to the call center (PT) of the paging network or to the corresponding base station.

4. Paging network of claim 3 characterised in that the control (S) is connected with a local device for presence control (ZE) for determining if a subscriber is located in the area of the corresponding base station, and local paging calls are transmitted to the corresponding base station if the subscriber is present and to the call center of the paging network if the subscriber is not present.

5. Paging network of one of the preceding claims characterised in that a first group of the base stations does not possess a wire connection to the call center (PT) and a second group of the base station does posses wire connection to the call center, and that base stations of the second group are designed for transmitting the paging calls on the given emission frequency at increased transmission rate to the base stations of the first group in a further predefined time window of the cyclic transmission structure.

6. Paging network of one of the preceding claims characterised in that the base stations possess a control device (TSI), by means of which status reports or message requests can be transmitted, in a further predefined time window of the cyclic transmission structure, autonomously from each base station on the given transmission frequency to other base stations.

7. Method for the operation of the paging network for transmitting subscriber related local and non-local paging calls to portable pager receivers by means of a call center (PT), at least one paging network unit (PNU) for controlling the network operation and a number of spatially distributed base stations (BS, BS'), wherein the local paging calls are transmitted on at least one given emission frequency over the base stations, wherein the paging calls are transmitted in a cyclic transmission structure, wherein within one cycle at least one time window is provided for the emission of the non-local paging calls, as well as at least one second time window for the transmission of the local paging calls individually by individual or a group of base stations (BS, BS'), characterised in that the non-local paging calls are led to the base stations (BS, BS') and are emitted synchronously and simultaneously by the base stations (BS, BS') in the first time window on the at least one given emission frequency.

8. Method of claim 7 characterised in that at least a part of the base stations intermediately store the local paging calls and emit them in the second time window autonomously.

9. Method of claim 8 characterised in that the local paging calls are selectively emitted by the corresponding base station in the second transmission window or via the call center by all base stations in the first time window.

10. Method of one of the claims 7 to 9 characterised in that further time windows in the cyclic transmission structure are reserved by the paging network unit during which the base stations are exchanging messages among each other.

## Revendications

1. Réseau d'appel radio pour la transmission d'appels personnels locaux et inter-locaux destinés à des récepteurs portatifs, avec une centrale d'appel (PT) à travers laquelle les appels peuvent être introduits dans le réseau, avec au moins une unité de commande (PNU) pour le fonctionnement du réseau, et avec un certain nombre de stations de base (BS, BS') réparties dans l'espace et émettant les appels locaux sur au moins une fréquence émettrice déterminée, le réseau étant agencé pour émettre les appels selon une structure cyclique de transmission qui prévoit dans un cycle au moins une première fenêtre temporelle pour l'émission des appels inter-locaux ainsi qu'au moins une seconde fenêtre temporelle pour l'émission individuelle des appels locaux soit séparément par certaines stations de base, soit par un groupe de stations de base (BS, BS'), caractérisé en ce que le réseau est agencé pour la transmission des appels inter-locaux aux stations de base (BS, BS') et que celles-ci sont agencées pour émettre en commun et de manière synchrone les appels inter-locaux sur au moins ladite fréquence émettrice, et à l'intérieur de ladite première fenêtre temporelle.

2. Réseau selon la revendication 1, caractérisé en ce qu'au moins une station de base (BS') fait partie d'un réseau d'appel local (LN) et comprend des dispositifs (TSI) pour la mise au mémoire et l'émission d'appels locaux pendant la seconde fenêtre temporelle.

3. Réseau selon la revendication 2, caractérisé en ce que ladite station de base (BS') est connectée à une centrale locale (LT) comportant un circuit de commande (S) pour transmettre des appels locaux soit à la centrale d'appel (PT) du réseau, soit à la station de base correspondante.

4. Réseau selon la revendication 3, caractérisé en ce que le circuit de commande (S) est relié à un dispositif local de contrôle de présence (ZE) pour déterminer si un participant se trouve dans le domaine d'une station de base, et pour transmettre des appels locaux soit à la station de base en question si le participant est présent, soit à la centrale d'appel du réseau s'il est absent.

5. Réseau selon une des revendications précédentes, caractérisé en ce qu'un premier groupe de stations de base ne possède pas de lignes de communication avec la centrale d'appel (PT), qu'un second groupe en possède, et que les stations de base de ce second groupe sont agencées pour transmettre, à l'intérieur d'une autre fenêtre temporelle déterminée de la structure cyclique de transmission, les appels aux stations de base du premier groupe sur la fréquence émettrice déterminée et avec une vitesse de transmission accélérée.

6. Réseau selon une des revendications précédentes, caractérisé en ce que les stations de base possèdent un dispositif de commande (TSI) au moyen duquel des rapports d'état ou des requêtes d'appels sont émis de façon autonome par chaque station de base sur la fréquence émettrice déterminée, dans une autre fenêtre temporelle donnée de la structure cyclique de transmission.

7. Procédé pour la mise en fonction d'un réseau d'appel radio pour la transmission d'appels individuels locaux et inter-locaux destinés à des récepteurs portatifs au moyen d'une centrale d'appel (PT), d'au moins une unité de commande (PNU) du fonctionnement du réseau, et d'un certain nombre de stations de base (BS, BS') réparties dans l'espace, les appels locaux étant émis sur au moins une fréquence déterminée par l'intermédiaire des stations de base, les appels étant émis selon une structure cyclique de transmission, un cycle comprenant au moins une première fenêtre temporelle destinée à l'émission de l'appel inter-local, ainsi qu'au moins une seconde fenêtre temporelle pour l'émission individuelle des appels locaux par des stations de base séparées ou un groupe de telles stations (BS, BS'), caractérisé en ce que les appels inter-locaux sont transmis aux stations de base (BS, BS') et émis par celles-ci-en commun et de façon synchrone, dans la première fenêtre temporelle et sur au moins ladite fréquence émettrice.

8. Procédé selon la revendication 7, caractérisé en ce qu'au moins certaines stations de base enregistrent provisoirement des appels locaux et émettent ceux-ci de façon autonome à l'intérieur de la seconde fenêtre temporelle.

9. Procédé selon la revendication 8, caractérisé en ce que les appels locaux sont émis soit dans la seconde fenêtre par la station de base correspondante, soit dans la première fenêtre par l'intermédiaire de la centrale d'appel et de toutes les stations de base.

10. Procédé selon une des revendications 7 à 9, caractérisé en ce que l'unité de commande garde en réserve d'autres fenêtres temporelles de la structure cyclique de transmission, pendant lesquelles les stations de base échangent des messages entre elles.
